# EUROPÄISCHE PATENTSCHRIFT

(11) **EP 0 780 275 B1**
(45) Veröffentlichungstag und Bekanntmachung des Hinweises auf die Patenterteilung: **03.07.2002**
(21) Anmeldenummer: 96114989.5
(22) Anmeldetag: 19.09.1996
(51) Int. Cl.: B60T 8/00

(54) **Verfahren und Vorrichtung zur Antriebsschlupfregelung**
Method an apparatus for anti-skid control
Méthode et dispositif pour régulation de patinage

(30) Priorität: 23.12.1995 DE 19548564
(43) Veröffentlichungstag der Anmeldung: 25.06.1997
(73) Patentinhaber: ROBERT BOSCH GMBH, 70442 Stuttgart (DE); MAN Nutzfahrzeuge Aktiengesellschaft, 80995 München (DE)
(72) Erfinder: Schramm, Herbert, 71229 Leonberg (DE); Ziegler, Andreas, 71287 Weissach (DE); Kozel, Peter, 85235 Odelzhausen (DE)

(56) Entgegenhaltungen:
- US-A- 5 313 391

## Beschreibung

### Stand der Technik

Die Erfindung betrifft ein Verfahren und eine Vorrichtung zur Antriebsschlupfregelung gemäß den Oberbegriffen der unabhängigen Patentansprüche.

Bei Beschleunigungsvorgängen auf Straßen mit niederem Reibwert gibt der Fahrer oft zu viel Gas, so daß die Antriebsräder durchdrehen. In diesen Fällen regelt die Antriebsschlupfregelung (ASR) einen im Steuergerät berechneten Antriebsschlupf ein. Dieser Schlupf bestimmt die Traktion sowie die Stabilität (Spurtreue) des Fahrzeugs.

Für viele Staßenoberflächen gilt, daß eine hohe Traktion auch einen großen, eine gute Fahrzeugstabilität aber einen kleinen Sollschlupf erfordert. Die Bildung des Sollschlupfes ist somit ein Kompromiß zwischen maximal erreichbarer Traktion und noch akzeptierbarer Stabilität.

Um diese Situation zu verbessern, wird der Sollschlupf automatisch an die Fahrzeuggeschwindigkeit und an "Kurvenfahrt" adaptiert. Bei Geradeausfahrt berechnet sich der Sollschlupf meist als Addition eines geschwindigkeitsunabhängigen und eines geschwindigkeitsabhängigen Wertes. Im Normalfall werden diese Werte im Fahrversuch so ausgelegt, daß der relative Sollschlupf (Sollschlupf bezogen auf die Fahrzeuggeschwindigkeit) der Antriebsräder mit zunehmender Geschwindigkeit abnimmt, so daß bei höheren Geschwindigkeiten eine bessere Fahrzeugstabilität erreicht wird. Bei niedrigeren Geschwindigkeiten ist der relative Sollschlupf groß, er gibt somit in vielen Fällen eine größere Traktion.

Eine derartige Vorgehensweise ist beispielsweise aus der EP-A 166 178 bekannt.

Um auch bei niederen Geschwindigkeiten die Spurtreue des Fahrzeugs während einer Kurvenfahrt zu garantieren, wird in der Regel der Sollschlupf in Abhängigkeit der Geschwindigkeit und eines aus den Radgeschwindigkeiten geschätzten Kurvenradius verkleinert. Diese Vorgehensweise ist beispielsweise aus der DE-A1 36 12 170 bekannt.

Die Art der Sollschlupfberechnung führt bei schneller oder langsamer Bergfahrt in manchen Fällen zu einer Verkleinerung des Motormoments durch die Antriebsschlupfregelung, so daß das Fahrzeug infolge des nicht mehr ausreichenden Motormoments langsamer wird. Schließlich kann in Extremfällen das Fahrzeug sogar zum Stehen kommen.

Es ist Aufgabe der Erfindung, diese unbefriedigende Situation zu vermeiden und eine Bestimmung des Sollschlupfes anzugeben, bei denen die Traktion in den Fällen vergrößert wird, in denen der Fahrer Traktion fordert, zum Beispiel bei einer Bergfahrt und /oder loser Fahrbahnoberfläche.

Dies wird durch die kennzeichenden Merkmale der unabhängigen Patentansprüche erreicht.

Aus der EP-B1 389 497 (US-Patent 5 313 391) ist ein Antriebsschlupfregelsystem bekannt, bei welchem der Sollschlupf abhängig von der Fahrzeugbeschleunigung berechnet wird, um eine Verbesserung der Traktion zu erzielen. Ferner wird der Sollschlupf abhängig von der quadratischen Fahrgeschwindigkeit korrigiert, um Reifentoleranzen auszugleichen, und der Fahrereinfluß auf die Schlupfschwellenbildung und damit auf die Abstimmung von Traktion und Stabilität berücksichtigt. Letzteres erfolgt dadurch, das Fahrzeugbeschleunigung und quadratische Fahrzeuggeschwindigkeit mit der Fahrpedalstellung beziehungsweise der Drosselklappenstellung gewichtet werden. Allerdings verliert bei kleiner werdender Beschleunigung und sinkender Fahrzeuggeschwindigkeit der Fahrereinfluß an Wirkung.

### Vorteile der Erfindung

Es wird sichergestellt, daß auch bei extremen Situationen bei Bergfahrt und eingreifender Antriebsschlupfregelung das Motormoment nicht soweit reduziert wird, daß das Fahrzeug wesentlich langsamer wird und schließlich zum Stehen kommen kann. Hierzu wird in Bereichen, in denen vom Motor ein hohes Drehmoment abverlangt wird, der Sollschlupf vergrößert und somit der Traktion der Vorzug gegeben.

In einer ersten Variante der Erfindung wird der Sollschlupf um einen Betrag erhöht, wobei der Erhöhungsbetrag für den Sollschlupf aus einer fest vorgegebenen Zuordnung nur abhängig von der Fahrpedalstellung gebildet wird. Ein besonderer Vorteil ergibt sich durch die Veränderung des Sollschlupfes abhängig von der Fahrpedalstellung, wenn der Sollschlupf ab einem vorgegebenen Fahrpedalstellungswert sich bis zu einem zweiten vorgegebenen Wert erhöht, außerhalb dieses Bereiches im wesentlichen konstant bleibt.

In einer zweiten Variante der Erfindung wird der Sollschlupf um einen Betrag erhöht, wobei der Erhöhungsbetrag für den Sollschlupf abhängig von der Motordrehzahl gebildet wird. Insbesondere wird der Sollschlupf in Drehzahlbereichen mit abfallender Momentenkennlinie verringert und so die Stabilität in Vordergrund geschoben.

In einer dritten Variante der Erfindung wird der Sollschlupf um einen Betrag erhöht, wobei der Erhöhungsbetrag für den Sollschlupf abhängig vom Fahrerwunsch (FW) gebildet wird. Hier ist insbesondere an eine Anpassung des Sollschlupfes an den zur Steuerung eines Dieselmotors verwendeten Fahrerwunsches, das heißt an die Sollkraftstoffmenge, gedacht. Diese wird in einem elektronischen Dieselsteuergerät abhängig von Fahrpedalstellung und Motordrehzahl aus einem vorgegebenen Kennfeld ausgelesen. Die Abhängigkeit des Schlupfes vom Fahrerwunsch entspricht qualitativ der Abhängigkeit des Schlupfes von der Fahrpedalstellung. In besonders vorteilhafter Weise wird dieses Signal vom elektronischen Dieselsteuergerät über ein Kommunikationssystem (zum Beispiel CAN) dem Steuergerät zur Antriebsschlupfregelung zugeführt.

Weitere Vorteile ergeben sich aus der nachfolgenden Beschreibung von Ausführungsbeispielen bzw. aus den abhängigen Patentansprüchen.

### Zeichnung

Die Erfindung wird anhand den in der Zeichnung dargestellten Ausführungsbeispielen näher erläutert. In Figur 1 ist ein Übersichtsblockschaltbild einer Antriebsschlupfregelung mit Blick auf die erfindungsgemäße Lösung dargestellt. Figur 2 zeigt beispielhaft eine als geeignet erkannten Abhängigkeit der Schlupferhöhung vom Fahrerwunsch. Figur 3 schließlich zeigt ein Flußdiagramm, welches die Realisierung der erfindungsgemäßen Lösung als Programm eines Mikrocomputers skizziert.

### Beschreibung von Ausführungsbeispielen

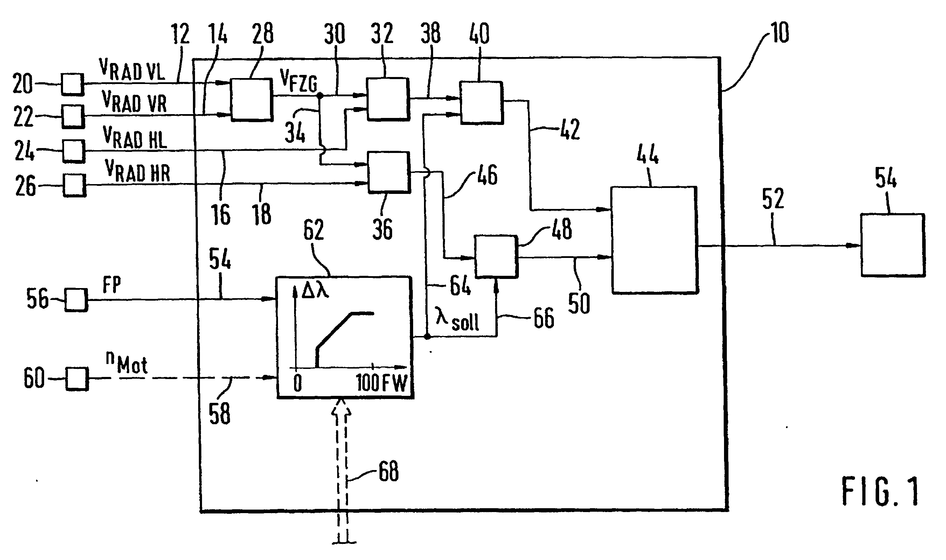

Figur 1 zeigt anhand eines Übersichtsblockschaltbildes ein Beispiel einer Antriebsschlupfregelung mit Blick auf die erfindungsgemäße Lösung. Im Rahmen dieses Beispiels ist vorgesehen, bei Überschreiten der vorgegebenen Sollschlupfschwelle durch wenigstens eines oder durch beide Antriebsräder zumindest das Antriebsmoment des Motors des Fahrzeugs im Sinne einer Reduzierung des Antriebsschlupfes zu beeinflussen. Zur Durchführung der Antriebsschlupfregelung, zur Bestimmung der Schlupfwerte der Antriebsräder sowie zur Beeinflussung des Motormoments bei unzulässigem Antriebsschlupf an einem oder an beiden Antriebsrädern einer Achse sind aus dem Stand der Technik verschiedene Vorgehensweisen bekannt. Im Rahmen eines bevorzugten Ausführungsbeispiels wird der in Figur 1 dargestellte Weg gewählt.

Der Steuereinheit 10 werden über Eingangsleitungen 12, 14, 16 und 18 von entsprechenden Meßeinrichtungen 20, 22, 24 und 26 die Geschwindigkeiten der Räder (Vradvl, Vradhl, Vradvr, Vradhr) eines zweiachsigen Fahrzeugs zugeführt. Dabei sei davon ausgegangen, daß es sich bei dem Fahrzeug um ein heckgetriebenes Fahrzeug handelt. Die Eingangsleitungen 12 und 14, über die von den Meßeinrichtungen 20 und 22 die Radgeschwindigkeiten Vradvl und Vradvr der nicht angetriebenen Fahrzeugräder zugeführt werden, werden im Antriebsschlupfregler auf einen Referenzwertbildner 28 geführt. Von dem Referenzwertbildner führt eine Leitung 30 zu einem ersten Vergleicher 32, eine Leitung 34 zum zweiten Vergleicher 36. Dem Vergleicher 32 wird die Eingangsleitung 16, welche die Radgeschwindigkeit des ersten angetriebenen Rades Vradhl übermittelt, zugeführt. Dem Vergleicher 36 wird die Eingangsleitung 18, die die Radgeschwindigkeit des zweiten angetriebenen Rades Vradhr übermittelt, zugeführt. Die Ausgangsleitung 38 des Vergleichers 32 führt auf einen weiteren Vergleicher 40, dessen Ausgangsleitung 42 auf den eigentlichen Antriebsschlupfregler 44 führt. Die Ausgangsleitung 46 des Vergleichers 36 führt auf einen Vergleicher 48, dessen Ausgangsleitung 50 auf den Antriebsschlupfregler 44 führt. Dessen Ausgangsleitung 52, die gleichzeitig Ausgangsleitung der Steuereinheit 10 ist, führt zur Beeinflussung des Motormoments auf den Fahrzeugmotor 54 bzw. auf eine das Motormoment der Antriebseinheit beeinflussende Steuereinheit, beispielsweise eine elektronische Dieselregelung (EDC). Der Steuereinheit 10 wird ferner eine Eingangsleitung 54 von einer Meßeinrichtung 56 zur Erfassung des Fahrpedalstellung sowie in einer vorteilhaften Ergänzung eine Eingangsleitung 58 von einer Meßeinrichtung 60 zur Erfassung der Motordrehzahl zugeführt. Diese Eingangsleitungen führen auf einen Sollwertbildner 62, dessen erste Ausgangsleitung 64 auf den Vergleicher 40, dessen zweite Ausgangsleitung 66 auf den Vergleicher 48 führt. Alternativ zu den Eingangsleitungen 54 und 58 ist die Steuereinheit 10 über ein Kommunikationssystem 68 (zum Beispiel CAN) mit der anderen Steuereinheiten, insbesondere der Motorsteuereinheit verbunden. Über dieses Kommunikationssystem werden Betriebsgrößen dem Sollwertbildner 62 zugeführt.

Im bevorzugten Ausführungsbeispiel bildet der Referenzbildner 28 aus den zugeführten Radgeschwindigkeiten der nicht angetriebenen Räder eine Referenzgeschwindigkeit VFZG für die Antriebsschlupfregelung durch Mittelwertbildung der beiden Radgeschwindigkeitssignalwerte. In den Vergleichern 32 und 36 wird zur Ermittlung des Antriebsschlupfes an den Antriebsrädern des Fahrzeugs die jeweilige Radgeschwindigkeit des Antriebsrads mit der ermittelten Referenzgeschwindigkeit verglichen. Im Sollwertbildner 62 wird der Sollantriebsschlupf ermittelt. Neben anderen, den Sollschlupf beeinflussenden Größen ermittelt der Sollwertbildner 62 auf der Basis der zugeführten Größen ausgehend von einem vorgegebenen Festwert den Sollschlupf der Antriebsschlupfregelung, der an die Vergleicher 40 und 48 abgegeben wird. Erfindungsgemäß wird dieser Sollschlupf nach Maßgabe der Fahrpedalstellung, der Motordrehzahl oder des aus Fahrpedalstellung und Motordrehzahl gebildeten Fahrerwunsches angepaßt. In den Vergleichern 40 und 48 wird der Soll- mit dem jeweiligen Istwert verglichen und ein Ausgangssignal erzeugt, wenn der Istwert den Sollwert unzulässig, d.h. um einen gewissen Toleranzwert, überschreitet. Der Antriebsschlupfregler 44 empfängt dieses Signal und bildet nach Maßgabe einer vorgegebenen Regelstrategie, zum Beispiel PID, ein Ausgangssignal zur Reduzierung des Motormoments, so daß der Istschlupf sich dem Sollschlupf annähert. Dabei kann vorgesehen sein, das der Antriebsschlupfregler bei Vorliegen von unzulässigem Antriebsschlupf an einem Antriebsrad bereits in das Motormoment eingreift oder erst dann eingreift, wenn beide Vergleicher 40 und 48 ein Ausgangssignal erzeugen. Die Momentenreduzierung erfolgt dann in vorteilhafter Weise nach Maßgabe der größeren Abweichung, in vorteilhaften Ausführungsbeispielen oder in speziellen Betriebssituationen wird die Motormomentenbeeinflussung auch nach Maßgabe der jeweils kleineren Abweichung durchgeführt.

Neben der Beeinflussung des Antriebsmoments im Antriebsschlupffall ist vorgesehen, daß bei Durchdrehneigung eines Antriebsrades die diesem Antriebsrades zugehörige Bremse aktiviert wird. Dies ist aus Übersichtlichkeitsgründen in Figur 1 nicht dargestellt.

Zur Beeinflussung des Motormoments ist eine elektronische Motorsteuereinheit vorgesehen. Bei Anwendung für Nutzkraftfahrzeuge ist diese Steuereinheit eine elektronische Dieselregelung. Im Rahmen dieser Regelung ist ein Kennfeld vorgesehen, welches aus Fahrpedalstellung und Motordrehzahl den Fahrerwunsch, das heißt das Solldrehmoment beziehungsweise die Sollkraftstoffmenge für den Antriebsmotor ermittelt. In modernen Steuersystemen sind die einzelnen Steuereinheiten über ein Kommunikationssystem, zum Beispiel CAN, miteinander verbunden, über das Informationen und Daten ausgetauscht werden. Der Fahrerwunsch kann somit von der elektronischen Dieselregelung zur Antriebsschlupfregelung übermittelt werden und dort geeignet ausgewertet werden.

Befindet sich ein beladenes Fahrzeug auf einer Fahrbahn mit höherem Reibwert (trockene Straße, aufgeraute Schneeoberfläche, Baustellen, nicht asphaltierte Straßen, u.s.w.) betätigt ein Fahrer das Fahrpedal naturgemäß mehr, während er bei Fahrbahnen mit niedrigem Reibwert (Eis, festgefahrener Schnee) und bei leerem Fahrzeug das Fahrpedal weniger betätigt. Im ersten Fall erwartet der Fahrer eine hohe Traktion, im zweiten Fall eine gute Fahrzeugstabilität. Daher ist die Anpassung des Sollschlupfwertes abhängig von der Fahrpedalstellung derart zu wählen, daß je größer die Fahrpedalstellung desto größer der Sollschlupf ist.

Zur Minderung der Gefahr des Stehenbleibens am Berg ist es notwendig, im Motordrehzahlbereich mit hohem Drehmoment den Sollschlupf zu vergrößern und damit mehr die Traktion als die Stabilität zu bewichten. Im oberen Drehzahlbereich, wo im allgemeinen eine abfallende Momentenkennlinie auftritt, und in dem normalerweise der nächst höhere Gang gewählt wird, wird die Bewichtung Traktion zu Stabilität mehr zugunsten der Stabilität verändert. Dies bedeutet, daß zunächst mit zunehmender Motordrehzahl der Sollschlupf ansteigt, wobei er im Bereich höherer Drehzahlen bei abfallender Momentenkennlinie wieder abnimmt.

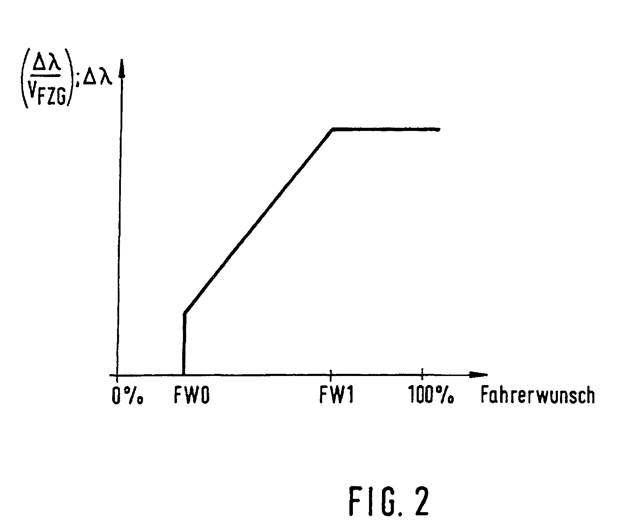

Eine Kombination der beiden Größen Fahrpedalstellung und Motordrehzahl stellt der oben erwähnte Fahrerwunsch dar. Wird zur Adaption des Sollschlupfes diese Größe verwendet, so hat sich in einem vorteilhaften Ausführungsbeispiel die in Figur 2 dargestellte Abhängigkeit als geeignet erwiesen.

In Figur 2 ist senkrecht die Erhöhung des Sollschlupfes über dem Fahrerwunsch aufgetragen. Ein entsprechendes Bild ergibt sich bei Darstellung der relativen Schlupferhöhung bezogen auf die Fahrzeuggeschwindigkeit über dem Fahrerwunsch. Der Fahrerwunsch verändert sich von 0% (losgelassenes Fahrpedal) bis 100% (Fahrpedal durchgetreten). Es hat sich gezeigt das eine im wesentlichen lineare Schlupferhöhung in einem mittleren Fahrerwunschbereich geeignet ist. Unterhalb eines Fahrerwunsches FW0 wird gegenüber dem vorliegenden Festwert keine Sollschlupferhöhung vorgenommen. Oberhalb dieses Fahrerwunschwertes erfolgt eine sprungförmige Anhebung des Sollschlupfes, welche anschließend im wesentlichen mit dem Fahrerwunsch linear ansteigt, bis beim Fahrerwunsch FW1 der Maximalwert der Sollschlupfveränderung erreicht ist. Ab diesem Wert bis zum vollständig betätigten Gaspedal bleibt die Sollschlupferhöhung im wesentlichen unverändert.

Dies hat in vorteilhafter Weise zur Folge, daß bei mittleren Fahrerwunsch der Sollschlupf mit zunehmendem Fahrerwunsch ansteigt, so daß der Eingriff in das Motormoment später erfolgt und somit mit zunehmendem Fahrerwunsch die Traktion des Fahrzeugs verbessert wird, während zu kleineren Fahrerwunschwerten hin durch den vergleichsweise frühen Motoreingriff die Fahrzeugstabilität verbessert wird.

Wird zur Anpassung des Sollschlupfes die Fahrpedalstellung verwendet, so ergibt sich in vorteilhafter Weise ein zu Figur 2 vergleichbares Verhalten, während bei Heranziehen der Motordrehzahl ab einer Maximaldrehzahl, der im wesentlichen das Drehmomentenmaximum der Momentenkennlinie entspricht, der Erhöhungswert wieder zu kleineren Werten hin abfällt.

Neben einem linearen Verhalten der Schlupferhöhung über den Fahrerwunsch, Fahrpedalstellung oder Motordrehzahl sind in anderen vorteilhaften Ausführungsbeispielen andere Funktionen, beispielsweise exponentielle oder parabelförmige Funktionsverläufe, denkbar.

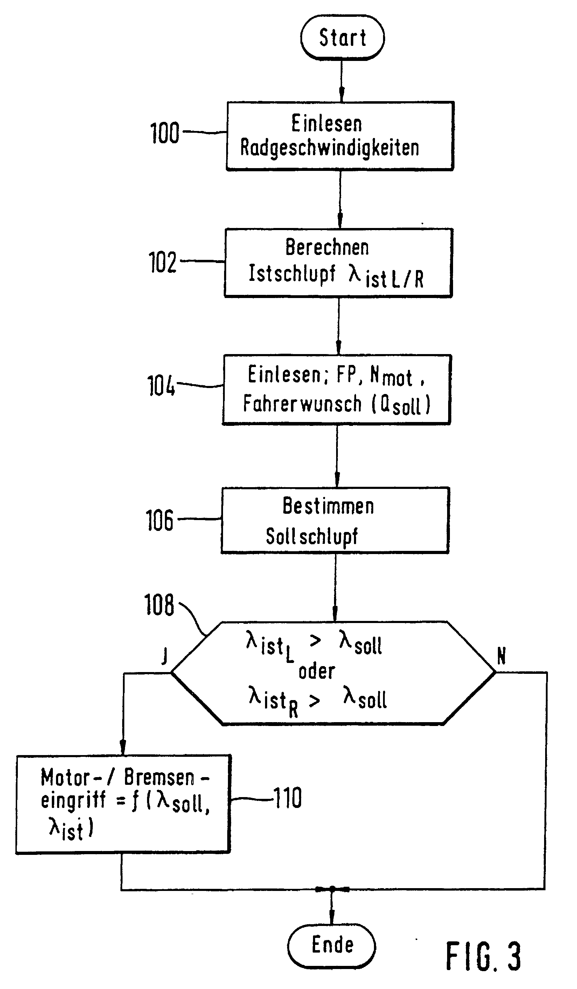

In Figur 3 ist ein Flußdiagramm dargestellt, welches die Realisierung der Antriebsschlupfregelung im Rahmen eines Rechnerprogramms skizziert.

Nach Start des Programmteils zur vorgegebenen Zeitpunkten wird im ersten Schritt 100 die Radgeschwindigkeiten der angetriebenen und der nicht angetriebenen Räder eingelesen und die Referenzgeschwindigkeit ermittelt. Daraufhin wird im Schritt 102 durch Vergleich der Radgeschwindigkeiten der Antriebsrädern mit der Referenzgeschwindigkeit die Istschlupfwerte λistL und λistR berechnet. Im darauffolgenden Schritt 104 werden Werte für die Fahrpedalstellung, Motordrehzahl und/oder über einen CAN-Bus der Fahrerwunsch (Sollmoment, Sollkraftstoffmenge) eingelesen. Daraufhin wird im Schritt 106 der Sollschlupfwert λsoll bestimmt. Dies erfolgt nach Maßgabe eines Festwertes, gegebenenfalls weiterer Betriebsgrößen und der wie in Figur 2 bzw. wie vorstehend beschrieben dargestellten Sollschlupferhöhung abhängig von Fahrerwunsch, Fahrpedalstellung und/oder Motordrehzahl. Auf den Schritt 106 folgt der Abfrageschritt 108, in dem die Schlupfistwerte mit dem Sollschlupf verglichen werden. Ist in bevorzugten Ausführungsbeispiel entweder der Istschlupf des linken oder der des rechten Rades größer als der vorgegebene Sollschlupf, so wird gemäß Schritt 110 abhängig von der Abweichung zwischen Soll- und Istwert das Motormoment reduziert und gegebenenfalls die zugehörige Radbremse aktiviert. In einem anderen Ausführungsbeispiel erfolgt der Motoreingriff nur dann, wenn an beiden Antriebsrädern Antriebsschlupf auftritt, während der Bremseneingriff erfolgt, wenn an nur einem Antriebsrad ein überhöhter Antriebsschlupf erkannt wurde. Nach Schritt 110 beziehungsweise im Falle einer negativen Antwort im Schritt 108 wird der Programmteil beendet und zu gegebener Zeit wiederholt.

## Patentansprüche

1. Verfahren zur Antriebsschlupfregelung, bei welchem bei Durchdrehneigung wenigstens eines Antriebsrades wenigstens das Drehmoment einer Antriebseinheit des Fahrzeugs im Sinne einer Reduzierung der Durchdrehneigung beeinflusst wird, wobei die Durchdrehneigung bei Überschreiten eines vorgegebenen Sollwertes (λsoll) durch den Schlupf wenigstens eines der Antriebsräder erkannt wird, und wobei dieser Sollwert abhängig von wenigstens einer Betriebsgröße (FP, nMot, FW) im Bereich höherer Leistungsanforderungen erhöht wird, **dadurch gekennzeichnet, dass**
- die wenigstens eine Betriebsgröße die Fahrpedalstellung (FP) ist, wobei ein Erhöhungsbetrag (Δλ) für den Sollschlupf (λsoll) aus einer fest vorgegebenen Zuordnung nur abhängig von der Fahrpedalstellung (FP) gebildet wird, oder
- die wenigstens eine Betriebsgröße die Drehzahl (nMot) der Antriebseinheit ist, wobei ein Erhöhungsbetrag (Δλ) für den Sollschlupf (λsoll) abhängig von der Motordrehzahl (nMot) gebildet wird, oder
- die wenigstens eine Betriebsgröße der aus Fahrpedalstellung und Motordrehzahl gebildete Fahrerwunsch (FW) ist, wobei ein Erhöhungsbetrag (Δλ) für den Sollschlupf (λsoll) abhängig vom Fahrerwunsch (FW) gebildet wird.

2. Verfahren nach Anspruch 1, **dadurch gekennzeichnet, dass** Erhöhungsbetrag (Δλ) vom Fahrerwunsch (FW) in einem mittleren Fahrerwunschbereich (FW0-FW1) im wesentlichen linear abhängt.

3. Verfahren nach einem der vorhergehenden Ansprüche, **dadurch gekennzeichnet, dass** in einem unteren Fahrerwunschbereich (0-FW0) der Erhöhungsbetrag unabhängig vom Fahrerwunsch ist, wobei ab einem bestimmten Fahrerwunschwert (FW0) eine sprungförmige Erhöhung des Sollwerts erfolgt.

4. Verfahren nach einem der vorhergehenden Ansprüche, **dadurch gekennzeichnet, dass** in höheren Fahrerwunschbereichen (FW1-100) bis zum maximalen Fahrerwunsch der Erhöhungsbetrag im wesentlichen unverändert bleibt.

5. Verfahren nach einem der vorhergehenden Ansprüche, **dadurch gekennzeichnet, dass** der Fahrerwunschwert (FW) über ein Kommunikationssystem (68) von einer elektronischen Dieselregelung übermittelt wird.

6. Verfahren nach einem der vorhergehenden Ansprüche, **dadurch gekennzeichnet, dass** wenn
- die wenigstens eine Betriebsgröße die Drehzahl (nMot) der Antriebseinheit ist, oder
- die wenigstens eine Betriebsgröße der aus Fahrpedalstellung und Motordrehzahl gebildete Fahrerwunsch (FW) ist,
der Erhöhungsbetrag (Δλ) mit steigender Motordrehzahl (nMot) zunächst ansteigt, im höheren Drehzahlbereich bei abfallender Momentenkennlinie der Antriebseinheit mit steigender Motordrehzahl (nMot) abfällt.

7. Verfahren nach einem der vorhergehenden Ansprüche, **dadurch gekennzeichnet, dass** die feste Zuordnung des Erhöhungsbetrags (Δλ) zur Fahrpedalstellung (FP) derart vorgegeben ist, daß der Betrag mit steigender Fahrpedalstellung ansteigt.

8. Vorrichtung zur Antriebsschlupfregelung, mit einer Steuereinheit (10), die bei Durchdrehneigung wenigstens eines Antriebsrades wenigstens das Drehmoment einer Antriebseinheit des Fahrzeugs im Sinne einer Reduzierung der Durchdrehneigung beeinflusst, welche eine Vergleicher (40, 48) aufweist, der die Durchdrehneigung bei Überschreiten eines vorgegebenen Sollwertes (λsoll) durch den Schlupf wenigstens eines der Antriebsräder erkennt, und mit einem Sollwertbilder (62), in dem der Sollwert (λsoll) abhängig von wenigstens einer Betriebsgröße (FP, nMot, FW) im Bereich höherer Leistungsanforderungen erhöht wird, **dadurch gekennzeichnet, dass**
- die wenigstens eine Betriebsgröße die Fahrpedalstellung (FP) ist, wobei ein Erhöhungsbetrag (Δλ) für den Sollschlupf (λsoll) aus einer fest vorgegebenen Zuordnung nur abhängig von der Fahrpedalstellung (FP) gebildet wird, oder
- die wenigstens eine Betriebsgröße die Drehzahl (nMot) der Antriebseinheit ist, wobei ein Erhöhungsbetrag (Δλ) für den Sollschlupf (λsoll) abhängig von der Motordrehzahl (nMot) gebildet wird, oder
- die wenigstens eine Betriebsgröße der aus Fahrpedalstellung und Motordrehzahl gebildete Fahrerwunsch (FW) ist, wobei ein Erhöhungsbetrag (Δλ) für den Sollschlupf (λsoll) abhängig vom Fahrerwunsch (FW) gebildet wird.

## Claims

1. Traction control method in which, when there is a tendency for at least one drive wheel to spin, at least the torque of a drive unit of the vehicle is influenced in order to reduce the tendency to spin, the tendency to spin being detected when the slip of at least one of the drive wheels exceeds a predefined setpoint value (λsetp), and this setpoint value being increased as a function of at least one operational variable (FP, nMot, FW) in the region of relatively high power requirements, **characterized in that**
- the at least one operational variable is the accelerator pedal position (FP), an increase amount (Δλ) for the setpoint slip (λsetp) being formed from a permanently predefined assignment only as a function of the accelerator pedal position (FP), or
- the at least one operational variable being the rotational speed (nMot) of the drive unit, an increase amount (Δλ) for the setpoint slip (λsetp) being formed as a function of the engine speed (nMot), or
- the at least one operational variable being the driver's request (FW) formed from the accelerator pedal position and engine speed, an increase amount (Δλ) for the setpoint slip (Δsetp) being formed as a function of the driver's request (FW).

2. Method according to Claim 1, **characterized in that** the increase amount (Δλ) is dependent on the driver's request (FW) essentially linearly in a medium driver's request range (FW0-FW1).

3. Method according to one of the preceding claims, **characterized in that** the increase amount is independent of the driver's request in a lower driver's request range (0-FW0), a jump-shaped increase in the setpoint value taking place starting from a specific driver's request value (FW0).

4. Method according to one of the preceding claims, **characterized in that** the increase amount remains essentially unchanged in relatively high driver's request ranges (FW1-100) to the maximum driver's request.

5. Method according to one of the preceding claims, **characterized in that** the driver's request value (FW) is transmitted by an electronic diesel regulator by means of a communication system (68).

6. Method according to one of the preceding claims, **characterized in that**
- the at least one operational variable is the rotational speed (nMot) of the drive unit or
- the at least one operational variable is the driver's request (FW) formed from the accelerator pedal position and engine speed,
- the increase amount (Δλ) firstly rises as the engine speed (nMot) increases, and drops in the relatively high rotational speed range as the torque characteristic curve of the driver unit drops while the engine speed (nMot) is increasing.

7. Method according to one of the preceding claims, **characterized in that** the fixed assignment of the increase amount (Δλ) to the accelerator pedal position (FP) is predefined in such a way that the amount increases as the accelerator pedal position rises.

8. Traction control device, having a control unit (10) which, when there is a tendency for at least one drive wheel to spin, influences at least the torque of a drive unit of the vehicle in order to reduce the tendency to spin, which has a comparator (40, 48) which detects the tendency to spin when the slip of at least one of the drive wheels exceeds a predefined setpoint value (Δsetp), and having a setpoint value former (62) in which the setpoint value (Δsetp) is increased as a function of at least one operational variable (FP, nMot, FW) in the region of relatively high power requirements, **characterized in that**
- the at least one operational variable is the accelerator pedal position (FP), an increase amount (Δλ) for the setpoint slip (Δsetp) being formed from a permanently predefined assignment only as a function of the accelerator pedal position (FP), or
- the at least one operational variable is the rotational speed (nMot) of the drive unit, an increase amount (Δλ) for the setpoint slip (Δsetp) being formed as a function of the engine speed (nMot), or
- the at least one operational variable being the driver's request (FW) formed from the accelerator pedal position and engine speed, an increase amount (Δλ) for the setpoint slip (Δsetp) being formed as a function of the driver's request (FW).

## Revendications

1. Procédé de régulation du patinage à l'entraînement selon lequel en cas de tendance au patinage d'au moins une roue motrice, on influence le couple d'une unité d'entraînement du véhicule dans le sens d'une réduction de la tendance au patinage, la tendance au patinage étant détectée en cas de dépassement d'une valeur de consigne prédéterminée (λ_{cons}) par le patinage d'au moins l'une des roues motrices et cette valeur de consigne étant augmentée selon au moins un paramètre de fonctionnement (FP, nMot, FW) dans la plage des demandes de puissance élevées,
**caractérisé en ce que**
- au moins une grandeur de fonctionnement est la position de la pédale d'accélérateur (FP), et une valeur d'augmentation (Δλ) du patinage de consigne (λcons) étant formée à partir d'une association fixe prédéterminée seulement en fonction de la position de la pédale d'accélérateur (FP) ou
- la grandeur de fonctionnement est la vitesse de rotation (nMot) de l'unité d'entraînement et la valeur de l'augmentation (Δλ) du patinage de consigne (λcons) est formée en fonction de la vitesse de rotation du moteur (nMot), ou
- au moins une grandeur de fonctionnement est la demande du conducteur (FW) formée à partir de la position de la pédale d'accélérateur et de la vitesse de rotation du moteur et on forme une valeur d'augmentation (Δλ) du patinage de consigne (λcons) en fonction de la demande du conducteur (FW).

2. Procédé selon la revendication 1,
**caractérisé en ce que**
la valeur de l'augmentation (Δλ) de la demande du conducteur (FW) dans une plage intermédiaire de la demande du conducteur (FW0-FW1) correspond à une fonction essentiellement linéaire.

3. Procédé selon l'une des revendications précédentes,
**caractérisé en ce que**
dans la plage inférieure des demandes du conducteur (O-FWO) la valeur de l'augmentation est indépendante de la demande du conducteur et à partir d'une certaine demande du conducteur (FWO) on a une augmentation brusque de la valeur de consigne.

4. Procédé selon l'une des revendications précédentes,
**caractérisé en ce que**
dans les plages supérieures de demande du conducteur (FW1-100) jusqu'à la demande maximale du conducteur, la valeur de l'augmentation reste essentiellement inchangée.

5. Procédé selon l'une des revendications précédentes,
**caractérisé en ce que**
la valeur de la demande du conducteur (FW) est transmise par un système de communication (68) à partir d'une régulation électronique de moteur diesel.

6. Procédé selon l'une des revendications précédentes,
**caractérisé en ce que**
- si au moins une grandeur de fonctionnement est la vitesse de rotation (nMot) de l'unité d'entraînement, ou
- si au moins une grandeur de fonctionnement est la demande du conducteur (FW) formée à partir de la position de la pédale d'accélérateur et de la vitesse de rotation du moteur,
la valeur de l'augmentation (Δλ) augmente tout d'abord avec la vitesse de rotation (nMot) du moteur et dans la plage de vitesse de rotation élevée, avec une courbe caractéristique de couple, décroissante, de l'unité d'entraînement, la valeur diminue en fonction de l'augmentation de la vitesse de rotation (nMot).

7. Procédé selon l'une des revendications précédentes,
**caractérisé en ce que**
l'association fixe de la valeur de l'augmentation (Δλ) par rapport à la position de la pédale d'accélérateur (FP) est prévue de façon que la valeur augmente avec l'augmentation de la position de la pédale d'accélérateur.

8. Dispositif de régulation du patinage à l'entraînement comprenant une unité de commande (10) qui, en cas de tendance au patinage d'au moins une roue motrice, influence au moins le couple d'une unité d'entraînement du véhicule dans le sens d'une réduction de la tendance au patinage, cette unité comprenant un comparateur (40, 48) qui détecte la tendance au patinage par le dépassement d'une valeur de consigne prédéterminée (λcons) par le patinage d'au moins l'une des roues motrices et un générateur de valeurs de consigne (62) qui augmente la valeur de consigne (λ_{cons}) en fonction d'au moins une grandeur de fonctionnement (FP, nMot, FW) dans la plage des demandes de puissance élevées,
**caractérisé en ce qu'**
- au moins une grandeur de fonctionnement est la position de la pédale d'accélérateur (FP) et la valeur de l'augmentation (Δλ) du patinage de consigne (λcons) est formée à partir d'une association fixe prédéterminée, seulement en fonction de la position de la pédale d'accélérateur (FP) ou,
- au moins une grandeur de fonctionnement est la vitesse de rotation (nMot) de l'unité d'entraînement et la valeur de l'augmentation (Δλ) du patinage de consigne (λcons) est formée en fonction de la vitesse de rotation du moteur (nMot), ou
- au moins une grandeur de fonctionnement de la demande du conducteur (FW) est formée à partir de la position de la pédale d'accélérateur et de la vitesse de rotation du moteur et la valeur de l'augmentation (Δλ) pour le patinage de consigne (λcons) est formée en fonction de la demande du conducteur (FW).
